# EUROPEAN PATENT SPECIFICATION

(11) **EP 3 488 917 B1**
(45) Date of publication and mention of the grant of the patent: **27.01.2021**
(21) Application number: 18204345.5
(22) Date of filing: 05.11.2018
(51) Int. Cl.: B01F 3/18, B01F 11/00, B65D 88/66, G01F 13/00

(54) **DOSING PLANT FOR POWDER PRODUCTS**
DOSIERANLAGE FÜR PULVERPRODUKTE
INSTALLATION DE DOSAGE POUR PRODUITS PULVÉRULENTS

(30) Priority: 23.11.2017 IT 201700134672
(43) Date of publication of application: 29.05.2019
(73) Proprietor: LAWER S.p.A., 13836 Cossato (BI) (IT)
(72) Inventor: DE BONA, Paolo, I-13853 Lessona (BI) (IT); COCCOLO, Gianluca, I-13836 Cossato (BI) (IT)
(74) Representative: Buzzi, Franco

(56) References cited:
- GB-A- 926 666
- GB-A- 191 110 132
- US-A- 3 874 641
- US-A- 6 062 720
- US-A1- 2014 246 361

## Description

### Field of the invention

The present invention regards dosing plants for powder products such as for example pigments, additives, chemical products in granular form or with micro-beads, which are widely used, for example, in the textile industry, in the food industry and in the chemical industry.

Such plants are conventionally provided with a feeder including a container for powder products having a bottom portion provided with an outlet opening, an extraction and dosing conveyor arranged beneath the opening for displacing the powder products, and with a stirrer suitable to avoid the packing of the powder products inside the container.

### State of the prior art

A crucial characteristic of a plant for dosing powder products is ensuring a high precision for dispensing powder products from the container which, in some events, for example in case of a small auger or in presence of products with low flowability, is affected by the action of the auger which excavates into the material forming an empty area or a cavity at the bottom of the container, nullifying or reducing the flow rate of the material and thus the dosing precision.

In order to overcome this drawback, extractor devices used on the bottom of the containers are known in the market. Such devices are usually provided with blades and paddles which allow the complete dispensing of powder products contained inside the container.

Problems common to extractor devices thus made are due to the wear of the surface of the paddles and blades, the fact that they can damage the powder products and the fact such devices are poorly effective as concerns the complete removal of the powder products inside the container at the end of the process for emptying the same.

The British patent n° GB-362935 describes a stirrer-separator for granular mine material comprising a container in which there is arranged a horizontal grid to which vertical bars are hung. The grid is moved horizontally by a reciprocating motion to oscillate the bars which the move the material in turn. In this case, the stirrer-separator is cumbersome and the arrangement of the vertical bars does not allow acting locally on the bottom of the container where there occurs the verification of the empty areas or cavities due to the action of the auger.

Documents US 2014/246361, GB-10132 and GB-926666 reveal stirrers comprising moveable juxtaposed walls.

### Summary of the invention

The object of the present invention is to overcome the aforementioned drawbacks, and more in particular provide a dosing plant of the type defined above capable of allowing to obtain a uniform dispensing of the powder products by the outlet opening of the container preventing the packing of such products.

According to the invention, such object is mainly attained due to the fact that said stirrer comprises two juxtaposed grids extending substantially vertically into said bottom portion of the container, and actuator means to displace said two grids with reciprocating motion so that when a grid moves in one direction the other grid moves in the opposite direction, said directions being substantially vertical.

The vertical reciprocating motion of the grids in the container allows to effectively stir the powder products thus preventing the extraction conveyor from excavating forming an empty area that would not allow the correct subsequent dosing of the material. This allows achieving high functional effectiveness while maintaining an optimal flow rate all the time and with the further advantage of quickening dosing operations.

According to the invention, the grids are connected to each other in a mutually moveable manner by means of at least one articulated frame. The frame can be actuated by means of a rotating shaft parallel to the bottom portion of the container, the shaft being controlled by a reciprocating rotation motion by means of actuator means. Such actuator means may comprise a pair of fluid jacks.

### Brief description of the drawings

The invention will now be described in detail, purely by way of non-limiting example, with reference to the attached drawings, wherein:
- figure 1 is a partial perspective view of a part of a dosing plant provided with a stirrer according to the invention;
- figures 2, 3 and 4 are front views of the part of the dosing plant of figure 1 in three different positions of the operating cycle.

### Detailed description of the invention

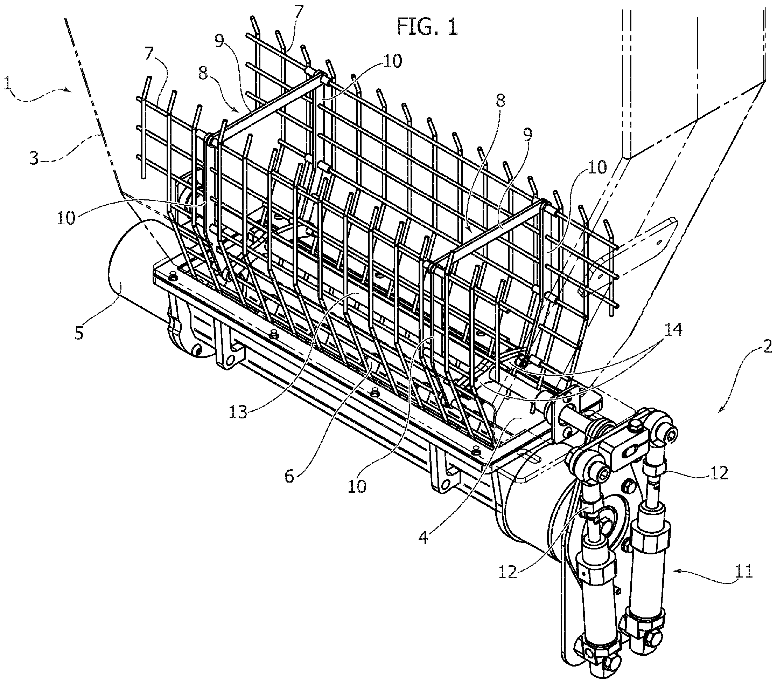

Initially referring to figure 1, there is illustrated a container or silo 1 designated to contain powder products. The container 1 is comprised in a feeder 2 of an automatic plant for dosing such products widely known in the prior art.

The container 1 has a bottom portion 3, preferably having an elongated shape. The bottom portion 3 is provided with an outlet opening 4 for dispensing powder products. The structure and shape of the container 1 can be different from the ones illustrated here according to criteria known in the prior art, which do not require to be illustrated herein given that per se they are not relevant to the intelligibility of the invention.

Beneath the outlet opening 4 of the container 1 and parallel thereto, there is arranged a driven extraction and dosing conveyor consisting, in the case of the illustrated example, of an auger 5 also generally known in the prior art, comprising a screw member 6 rotatable around the longitudinal axis thereof, horizontal in the illustrated representation, suitable to dose the material dispensed by the outlet opening 4 of the container 1 towards the container arranged above a weighing device, not illustrated in that conventional.

It should be observed that the extraction and dosing conveyor could consist - instead of an auger - of any other functionally similar device like a vibrating chute, a rotary airlock and the like.

Two juxtaposed grids 7 extend substantially vertically in the bottom portion 3 of the container 1, generally along the entire length of the container 1. Each grid 7 has a vertical upper portion and an oblique lower portion.

In the embodiment represented in the figures there are provided two articulated frames 8 suitable to connect - at the bottom part between each other - the grids 7 in a mutually moveable fashion. Each frame 8 comprises an upper arm 9 connected to the upper portions of the juxtaposed grids 7, and two vertical elements 10, each of which is integrally joined to a respective grid 7. Each end of the upper arm 9 is connected in an articulated manner to the upper end of a respective vertical element 10. In this manner, the two grids 7 are capable of floating at the upper part.

As observable in figure 1, there are also provided for actuators 11 suitable to displace the grids 7 with a reciprocating motion in the container 1. In the embodiment described herein, such actuators 11 consist in a pair of fluid jacks 12 suitable to rotate the shaft 13 arranged horizontally in proximity of the bottom of the container 1. Such shaft 13 is positioned equally spaced from the grids 7, and it is connected to the lower ends of the vertical elements 10 by means of a pair of respective juxtaposed arms 14 extending radially to the shaft 13. The arms 14 are articulated to the oblique portions of the two grids 7.

The arms 9, the vertical elements 10 and the arms 14 constitute two articulated parallelogram-like systems for displacing the grids 7 with a straight alternating motion so that when one grid 7 moves in one direction, the other grid 7 moves in the opposite direction. Such directions are substantially vertical.

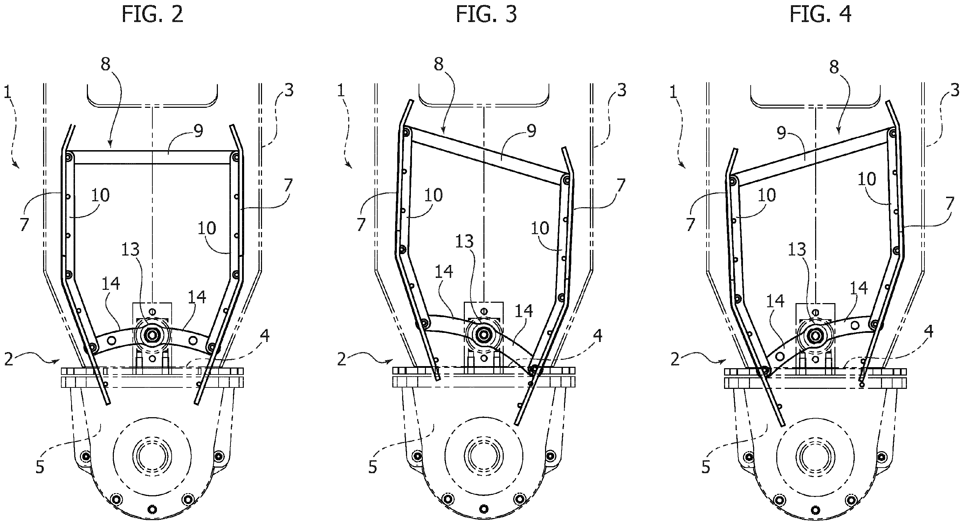

With reference to figures 2, 3 and 4, following is the description of an operating cycle of the stirrer of the invention according to the embodiment described herein. The actuators 11 were omitted in such figures for the sake of clarity of view.

Let us assume starting from the position of the stirrer represented in figure 2 in which the juxtaposed grids 7 are positioned at the same height and the pair of juxtaposed arms 14 is arranged substantially horizontally. Following the actuation of the jacks 11, the shaft 13 performs a first clockwise rotation by an angle for example comprised between 15° and 45° and beyond, even up to 90°. Figure 3 shows the configuration of the stirrer following the clockwise rotation of the shaft 13 in which the pair of juxtaposed arms 14 forms such angle with respect to the initial position, transmitting an upward displacement to the left vertical element 10 and thus to the left grid 7 integrally joined thereto and a simultaneous downward motion to the right vertical element 10 and thus to the right grid 7 integrally joined thereto. Figure 4 shows the configuration of the stirrer following a subsequent anticlockwise rotation of the shaft 13 in which, in light of the observations above, the right grid 7 is displaced upwards and the left grid 7 downwards. An operating cycle ends with the two grids 7 positioned like shown in figure 3 or in figure 4.

The continuous or intermittent repetition of the semi-rotation cycles of the shaft 13 with the ensuing reciprocating and juxtaposed vertical displacements of the grids 7, when dispensing the powder products by means of the auger 5, generates a continuous and uniform stirring of the powder products at the lower part 3 of the container 1 in proximity of the screw 6. Thus, it is possible to effectively prevent the formation of empty areas or cavities in the powder products due to the action of the auger 5, thus ensuring a constant flow rate of the powder material.

The functional effectiveness of the stirrer is improved further due to the fact that the two grids 7 float at the upper part, hence the relative reciprocating displacement path is irregular. Alternatively, the two grids 7 could also be mutually integrally joined at the upper part.

Thus, the dispensing of the material is continuous and uniform while dosing will be precise, regular and even faster.

Obviously, the construction details and the embodiments may widely vary with respect to what has been described and illustrated, without departing from the scope of protection of the present invention as defined in the claims that follow. Thus, for example, the actuation system could be different from the one represented in the drawings, for example it could consist in an electric motor directly or indirectly coupled to the shaft 13.

## Claims

1. Dosing plant for powder products comprising a feeder (2) having:
- a container (1) having a bottom portion (3) provided with an outlet opening (4),
- an extraction and dosing conveyor (5) arranged beneath said outlet opening (4), and a stirrer interposed between said container (1) and said conveyor (5), said stirrer comprising two juxtaposed grids (7) and actuator means (11) for displacing said two grids with reciprocating motion so that when a grid (7) moves in one direction, the other grid moves in the opposite direction,
**characterised in that** each of said grids (7) has a vertical upper portion and an oblique lower portion and extends inside said bottom portion (3) of the container (1), said grids (7) being connected to each other by means of at least one articulated frame (8) defining an articulated parallelogram by which said two grids are moved vertically, said frame (8) comprises an upper arm (9) connected to the upper portions of the juxtaposed grids (7), and two vertical elements (10), each of which is integrally joined to the respective grid (7), and each end of the upper arm (9) is connected in an articulated manner to the upper end of the respective vertical element (10).

2. Dosing plant according to claim 1, **characterised in that** said at least one articulated frame (8) is reciprocatingly actuated by means of a rotating shaft (13) parallel to said bottom portion (3) of the container (1) and connected to the actuator means (11).

3. Dosing plant according to claim 1 or 2, **characterised in that** said actuator means (11) comprise a pair of fluid jacks (12).

4. Dosing plant according to any of claims 1 to 3, **characterised in that** said articulated frame (8) includes an upper arm (9) articulated to said upper portion of the grid (7) and a lower arm (14) articulated to said lower portion of the grid (7).

5. Dosing plant according to any of claims 1 to 4 **characterised in that** it comprises two of said articulated frames (8).

## Patentansprüche

1. Dosieranlage für Pulverprodukte, umfassend eine Zuführvorrichtung (2), die Folgendes aufweist:
- einen Behälter (1) mit einem unteren Abschnitt (3), der mit einer Auslassöffnung (4) versehen ist,
- ein Entnahme- und Dosier-Band (5), das unter der Auslassöffnung (4) bereitgestellt ist, und einen Rührer, der zwischen dem Behälter (1) und dem Band (5) angeordnet ist, wobei der Rührer zwei nebeneinander angeordnete Gitter (7) und Betätigungsmittel (11) zum Verschieben der zwei Gitter mit Hin- und Herbewegung, sodass wenn sich ein Gitter (7) in eine Richtung bewegt, sich das andere Gitter in die entgegengesetzte Richtung bewegt, umfasst,
**dadurch gekennzeichnet, dass** jedes der Gitter (7) einen vertikalen oberen Abschnitt und einen geneigten unteren Abschnitt aufweist und sich im Inneren des unteren Abschnitts (3) des Behälters (1) erstreckt, wobei die Gitter (7) über mindestens einen Gelenkrahmen (8) miteinander verbunden sind, wodurch ein gelenkiges Parallelogramm definiert wird, durch das die zwei Gitter senkrecht bewegt werden, wobei der Rahmen (8) einen oberen Arm (9), der mit den oberen Abschnitten der nebeneinander angeordneten Gitter (7) verbunden ist, und zwei vertikale Elemente (10), von denen jedes einstückig mit dem jeweiligen Gitter (7) verbunden ist, umfasst, und jedes Ende des oberen Arms (9) auf gelenkige Weise mit dem oberen Ende des entsprechenden vertikalen Elements (10) verbunden ist.

2. Dosieranlage nach Anspruch 1, **dadurch gekennzeichnet, dass** der mindestens eine Gelenkrahmen (8) durch eine zu dem unteren Abschnitt (3) des Behälters (1) parallelen Drehwelle (13) hin- und herbeweglich betätigt wird und mit dem Betätigungsmittel (11) verbunden ist.

3. Dosieranlage nach Anspruch 1 oder 2, **dadurch gekennzeichnet, dass** das Betätigungsmittel (11) ein Paar Fluidzylinder (12) umfasst.

4. Dosieranlage nach einem der Ansprüche 1 bis 3,
**dadurch gekennzeichnet dass** der Gelenkrahmen (8) einen oberen Arm (9), der an den oberen Abschnitt des Gitters (7) angelenkt ist, und einen unteren Arm (14), der an den unteren Abschnitt des Gitters (7) angelenkt ist, umfasst.

5. Dosieranlage nach einem der Ansprüche 1 bis 4,
**dadurch gekennzeichnet, dass** sie zwei der Gelenkrahmen (8) umfasst.

## Revendications

1. Installation de dosage pour produits de poudre comprenant un chargeur (2) présentant :
- un récipient (1) présentant une portion de fond (3) munie d'une ouverture de sortie (4),
- un convoyeur d'extraction et de dosage (5) disposé sous ladite ouverture de sortie (4), et un agitateur intercalé entre ledit récipient (1) et ledit convoyeur (5), ledit agitateur comprenant deux grilles juxtaposées (7) et un moyen d'actionneur (11) pour déplacer lesdites deux grilles avec un déplacement de va-et-vient de sorte que lorsqu'une grille (7) se déplace dans une direction, l'autre grille se déplace dans la direction opposée,
**caractérisée en ce que** chacune desdites grilles (7) présente une portion supérieure verticale et une portion inférieure oblique et s'étend à l'intérieur de ladite portion de fond (3) du récipient (1), lesdites grilles (7) étant connectées l'une à l'autre au moyen d'au moins un cadre articulé (8) définissant un parallélogramme articulé par lequel lesdites deux grilles sont déplacées verticalement, ledit cadre (8) comprend un bras supérieur (9) connecté aux portions supérieures des grilles juxtaposées (7), et deux éléments verticaux (10), dont chacun est intégralement joint à la grille respective (7), et chaque extrémité du bras supérieur (9) est connectée de manière articulée à l'extrémité supérieure de l'élément vertical respectif (10).

2. Installation de dosage selon la revendication 1, **caractérisée en ce que** ledit au moins un cadre articulé (8) est actionné dans une manière de va-et-vient au moyen d'un arbre rotatif (13) parallèle à ladite portion de fond (3) du récipient (1) et connecté au moyen d'actionneur (11).

3. Installation de dosage selon la revendication 1 ou 2, **caractérisée en ce que** ledit moyen d'actionneur (11) comprend une paire de vérins à fluide (12).

4. Installation de dosage selon l'une quelconque des revendications 1 à 3, **caractérisée en ce que** ledit cadre articulé (8) inclut un bras supérieur (9) articulé à ladite portion supérieure de la grille (7) et un bras inférieur (14) articulé à ladite portion inférieure de la grille (7).

5. Installation de dosage selon l'une quelconque des revendications 1 à 4, **caractérisée en ce qu'**elle comprend deux desdits cadres articulés (8).
